(19) Europäisches Patentamt
European Patent Office
Office européen des brevets

(11) EP 0 704 487 A1

(12) **EUROPEAN PATENT APPLICATION**

(43) Date of publication:
**03.04.1996 Bulletin 1996/14**

(51) Int. Cl.[6]: **C08L 69/00**
// (C08L69/00, 79:08, 83:10)

(21) Application number: **94307176.1**

(22) Date of filing: **30.09.1994**

(84) Designated Contracting States:
**BE DE ES FR GB IT NL**

(71) Applicant: **GENERAL ELECTRIC COMPANY**
**Schenectady, NY 12345 (US)**

(72) Inventors:
- **Sybert, Paul Dean**
**Evansville, Indiana 47712 (US)**
- **Glaser, Raymond Hans**
**Mount Vernon, Indiana 47620 (US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

(54) **Polyester-carbonate compositions**

(57) Polyester-carbonates are made stress crack resistant by blending with minor proportions of polyetherimide resins and siloxane-polyetherimide copolymer resins.

EP 0 704 487 A1

Printed by Rank Xerox (UK) Business Services
2.9.16/3.4

## Description

### BACKGROUND OF THE INVENTION

### Field of The Invention

The invention relates to thermoplastic molding compositions and more particularly to molding compositions which are formulated from polyester-carbonate resins.

### Brief Description of the Related Art

Polyester-carbonates (also known as copolyester-polycarbonates) are a well known class of thermoplastic resin as is their preparation; see for example the descriptions given in U.S. Patents 3,169,121 and 4,487,896.

Polyester-carbonate (PPC) resins have been useful thermoplastic molding resins, to mold particular articles of certain physical properties. In general, the polyester-carbonate resins have had limited use for injection molding particular articles, being characterized as yielding molded articles having little resistance to stress cracking. For example, U.S. Patent 4,465,820 (Miller et al.) issued August 14, 1984 describes the problem and suggests that selected polyester-carbonates are free of the problem.

The U.S. Patent 4,430,484 (Quinn) issued February 7, 1984, describes blends of polyester-carbonates with polyetherimides as useful to mold articles showing improved, higher heat distortion temperature under load. However, articles molded from the exemplified blends still exhibit some brittleness when subjected to testing for notched Izod impact strengths. The reference is silent in respect to the stress-cracking problem.

In copending application EP-A-0519657, ternary blends of polyetherimides, siloxane polyetherimide copolymers and polycarbonate resins including polyester-carbonate resins are described broadly as thermoplastically moldable to obtain ductile articles with improved flame retardance and strength properties useful in engineering thermoplastics. The blends contain at least 60% by weight of polyetherimide resin. The disclosure however does not include actual examples of specific blend formulations containing polyester-carbonate resins, with characterization of the associated physical properties such as resistance to stress cracking. In fact, many (but not all) blends of polyester-carbonate resins with polyetherimides and siloxane polyetherimide copolymers yield brittle (non-ductile) articles when thermoplastically molded.

We have discovered that the addition of minor proportions of a polyetherimide resin and a siloxane-polyetherimide copolymer resin renders the polyester-carbonate molded articles resistant to stress-cracking without an adverse effect on ductility.

### SUMMARY OF THE INVENTION

The invention comprises, a method of improving stress crack resistance of articles molded from polyester-carbonate resins, which comprises;

blending with the polyester-carbonate

(A) from about 3 to 30 parts by weight (preferably about 15 to 25 parts) of a polyetherimide resin having repeating chain unit of the formula:-

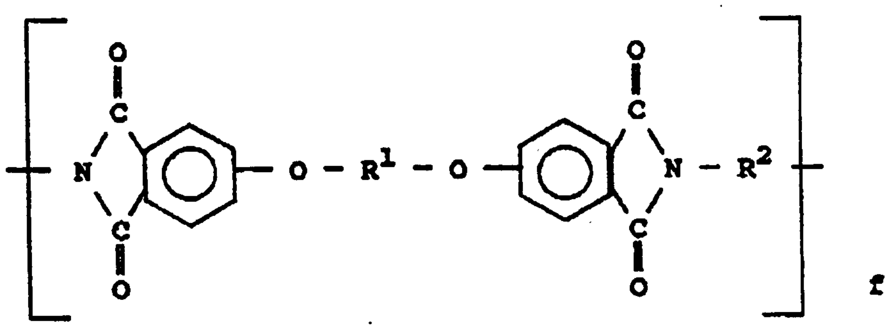

(I)

wherein f is an integer of from about 10 to about 500; $R^2$ represents a divalent aliphatic hydrocarbon radical containing from 3 to about 12 carbon atoms, a divalent aromatic hydrocarbon of 6 to 30 carbon atoms, a halogenated

hydrocarbon radial containing from 6 to 18 carbon atoms, or a divalent cycloaliphatic hydrocarbon radical containing from 3 to about 10 carbon atoms; and $R^1$ is a divalent aromatic organic radical having from 6 to 30 carbon atoms inclusive; and

(B) form about 0 to 1 parts (preferably 2 to 3 parts) by weight of a thermoplastic siloxane-polyetherimide copolymer.

Radicals included by $R^1$ are, for example, aromatic hydrocarbon radicals and halogenated aromatic hydrocarbon radicals, for example, phenylene, tolylene, chlorophenylene, naphthalene, and radicals of the formula:-

$$-R^3-(G)_g-R^3-$$

wherein $R^3$ is a divalent radical having from 6-13 carbon atoms, inclusive, selected from hydrocarbon radicals and halogenated hydrocarbon radicals; g is an integer of 0 to 1: and G is a divalent radical selected from those of formula:-

$$-C_zH_{2z}-,\ -\overset{\overset{\displaystyle O}{\|}}{C}-,\ -\underset{\underset{\displaystyle O}{\|}}{\overset{\overset{\displaystyle O}{\|}}{S}}-,\ -O-,\ \text{and}\ -\underset{\underset{\displaystyle R^4}{|}}{\overset{\overset{\displaystyle R^4}{|}}{Si}}-\quad ;$$

wherein z is an integer of from 1-5, inclusive, and $R^4$ is a monovalent alkyl, aryl, alkaryl or aralkyl radical, preferably selected from methyl and phenyl.

The term "blend" as used herein means a physical mixture or alloy of the prescribed polymeric components.

The term "stress cracking" as used herein means cracking of molded articles under environmental stress. This stress cracking can be caused by, inter alia, autoclaving, temperature cycling, and molding under ordinary processing conditions.

The compositions of the invention are useful to thermoplastically mold articles such as structural panels and the like.

## DETAILED DESCRIPTION OF THE PREFERRED EMBODIMENTS OF THE INVENTION

The polyester-carbonates used as ingredient (A) in the blends of the invention may be prepared by interfacial polymerization technique, well known to those skilled in the art; see for example the U.S. patents 3,169,121 and 4,487,896 which are incorporated herein by reference thereto.

In general, the method of interfacial polymerization comprises the reaction of a dihydric phenol with a carbonyl halide (the carbonate precursor) in the presence of a dicarboxylic acid (ester precursor).

Although the reaction conditions of the preparative processes may vary, several of the preferred processes typically involve dissolving or dispersing the diphenol reactants in aqueous caustic, adding the resulting mixture to a suitable water immiscible solvent medium and contacting the reactants with the carbonate and ester precursors, such as, in the presence of a suitable catalyst and under controlled pH conditions. The most commonly used water immiscible solvents include methylene chloride, 1,2-dichloroethane, chlorobenzene, toluene, and the like.

Advantageously a catalyst is added to the reaction mixture to promote the reaction. The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like.

The preferred process for preparing polyester-carbonate resins comprises a phosgenation reaction. The temperature at which the phosgenation reaction proceeds may vary from below 0°C, to above 100°C. The phosgenation reaction preferably proceeds at temperatures of from about room temperatures (25°C) to 50°C. Since the reaction is exothermic, the rate of phosgene addition may be used to control the reaction temperature. The amount of phosgene required will generally depend upon the amount of the dihydric phenols reactant added.

The dihydric phenols employed are known, and the reactive groups are the two phenolic hydroxyl groups. Some of the dihydric phenols are represented by the general formula:

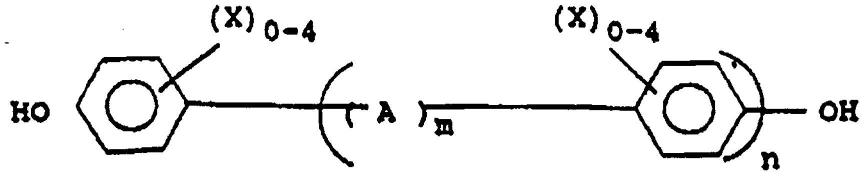

wherein A is a divalent hydrocarbon radical containing from 1 to about 15 carbon atoms; a substituted divalent hydrocarbon radical containing from 1 to about 15 carbon atoms and substituent groups such as halogen; -S- ; -SS-; -S(O)- ; $-S(O)_2-$ ; -O- ; or -C(O)- ; each X is independently selected from the group consisting of hydrogen, halogen, and a monovalent hydrocarbon radical such as an alkyl group of from 1 to about 8 carbon atoms, an aryl group of from 6-18 carbon atoms, an aralkyl group of from 7 to about 14 carbon atoms, an alkaryl group of from 7 to about 14 carbon atoms, an alkoxy group of from 1 to about 8 carbon atoms, or an aryloxy group of from 6 to 18 carbon atoms; and m is zero or 1 and n is an integer of from 0 to 5.

Typical of some of the dihydric phenols employed are bis-phenols such as (4-hydroxy-phenyl)methane, 2,2-bis(4-hydroxyphenyl)propane (also known as bisphenol-A), 2,2-bis(4-hydroxy-3,5-dibromo-phenyl)propane; dihydric phenol ethers such as bis(4-hydroxyphenyl) ether, bis(3,5-dichloro-4-hydroxyphenyl) ether; dihydroxydiphenyls such as p,p'-dihydroxydiphenyl, 3,3'-dichloro-4,4'-dihydroxydiphenyl; dihydroxyaryl sulfones such as bis(4-hydroxyphenyl) sulfone, bis (3,5-dimethyl-4-hydroxyphenyl) sulfone, dihydroxybenzenes such as resorcinol, hydroquinone, halo- and alkyl-substituted dihydroxybenzenes such as 1,4-dihydroxy-2,5-dichlorobenzene, 1,4-dihydroxy-3-methylbenzene; and dihydroxydiphenyl sulfides and sulfoxides such as bis(4-hydroxyphenyl) sulfide, bis(4-hydroxyphenyl) sulfoxide and bis(3,5-dibromo-4-hydroxyphenyl) sulfoxide. A variety of additional dihydric phenols are available and are disclosed in U.S. Pat. Nos. 2,999,835; 3,028,365 and 3,153,008; all of which are incorporated herein by reference thereto. It is, of course, possible to employ two or more different dihydric phenols or a combination or a dihydric phenol with a glycol.

The carbonate precursor can be either a carbonyl halide, a diarylcarbonate or a bishaloformate. The carbonyl halides include carbonyl bromide, carbonyl chloride, and mixtures thereof. The bishaloformates include the bishaloformates of dihydric phenols such as bischloroformates of 2,2-bis(4-hydroxyphenyl)-propane, 2,2-bis(4-hydroxy-3,5-dichlorophenyl)-propane, hydroquinone, and the like, or bishaloformates of glycols such as bishaloformates of ethylene glycol, and the like. While all of the above carbonate precursors are useful, carbonyl chloride, also known as phosgene, is preferred.

In general, any dicarboxylic acid conventionally used in the preparation of linear polyesters may be utilized in the preparation of polyester-carbonate resins. However, the polyester-carbonate resins used in the present invention are preferably prepared with aromatic dicarboxylic acids, and in particular terephthalic acid, mixed with isophthalic acid wherein the weight ratio of isophthalic acid to terephthalic acid is in the range of from about 93:7 to about 0:100, preferably 80:20 to 0:100.

Rather than utilizing the dicarboxylic acid per se, it is possible, and sometimes even preferred, to employ the reactive derivatives of said acid. Illustrative of those reactive derivatives are the acid halides. The preferred acid halides are the acid dichlorides and the acid dibromides. Thus, for example instead of using terephthalic acid or mixtures thereof with isophthalic acid, it is possible to employ terephthaloyl dichloride, and mixtures thereof with isophthaloyl dichloride.

Those skilled in the art will appreciate that the polyester-carbonates described herein may be characterized as containing recurring polycarbonate chain units of the formula:-

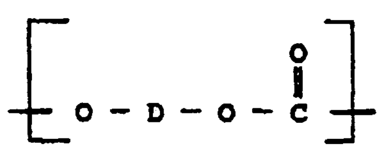

(II)

wherein D is a divalent aromatic radical of the dihydric phenol employed in the resin preparation; and repeating or recurring carboxylic chain units of the formula:-

-R-O-D-O- (III)

wherein D has the meaning previously ascribed to it and R is a divalent moiety selected from those of the formulae:-

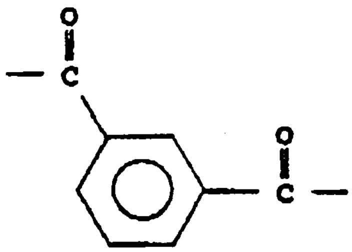

(IV)

or

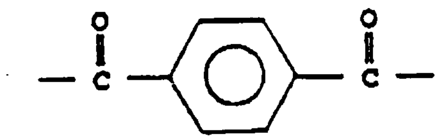

(V) ;

In the conventional interfacial polymerization methods of preparing polyester-carbonates a molecular weight regulator (a chain topper) is generally added to the reaction mixture prior to or during the contacting with carbonate and/or ester precursors. Useful molecular weight regulators include, but are not limited to, monohydric phenols such as phenol, chroman-I, para-tertiarybutylphenol, p-cumylphenol and the like. Techniques for the control of molecular weight are well known in the art and are used for controlling the molecular weight of the resins used in the present invention.

The proportions of reactants employed to prepare the polyester-carbonate resins will vary in accordance with their proposed use. In general, the amount of the ester units of formula (IV) and (V) may be from about 20 to about 80 weight percent, relative to the carbonate units, preferably 40 to 80 weight percent.

The preferred polyester-carbonates improved in the blends of the present invention are those derived from reaction of bisphenol-A and phosgene and having an intrinsic viscosity of about 0.45 to about 0.70 deciliters per gram (measured in methylene chloride at a temperature of 25°C).

The polyimide resins comprising the additive (A) in the invention are also known compounds whose preparation and properties are well known to those skilled in the art. For the purposes of the instant invention the polyetherimides are the preferred polyimides. The preferred polyetherimides are described in U.S. Patent Nos. 3,803,085 and 3,905,942, both of which are incorporated herein by reference. These polyetherimides are represented by the general formula (I) given above.

Illustrative of a particularly preferred polyetherimide falling within the scope of Formula (I) is one wherein $R^2$ is phenylene and $R^1$ is the divalent moiety of formula:-

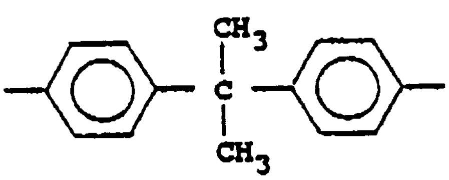

(VI)

In general, the polyetherimides of formula (I) given above may be prepared by the reaction of an aromatic bis(ether anhydride) of the formula:-

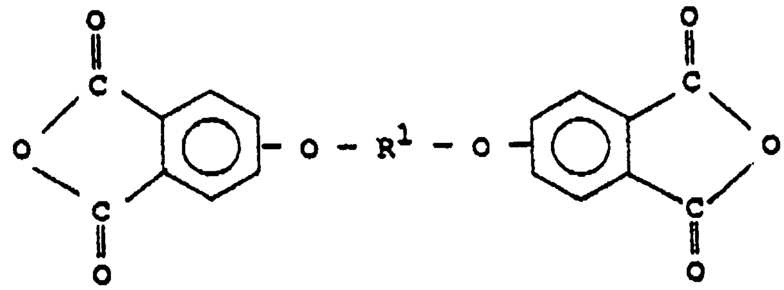

(VII)

wherein $R^1$ is as defined above, with an organic diamine of the formula:-

$$H_2N\text{-}R^2\text{-}NH_2 \qquad (VIII)$$

where $R^2$ is as defined hereinbefore.

Aromatic bis(ether anhydride)s of the above formula (VII)include, for example, 2,2-bis[4-(2,3-dicarboxyphenoxy)phenyl]propane dianhydride; 4,4'-bis(2,3-dicarboxyphenoxy)diphenyl ether dianhydride; 1,3-bis(2,3-dicarboxyphenoxy)benzene dianhydride; 4,4'-bis(2,3-dicarboxyphenoxy)diphenyl sulfide dianhydride; 1,4-bis(2,3-dicarboxyphenoxy)benzene dianhydride; 4,4'-bis(2,3-dicarboxyphenoxy)-benzophenone dianhydride; 4,4'-bis(2,3-dicarboxy)-phenoxy)diphenyl sulfone dianhydride; 2,2-bis[4-(3,4-dicarboxyphenoxy)phenyl]-propane dianhydride; 4,4'-bis(3,4-dicarboxyphenoxy)diphenyl ether dianhydrides; 4,4'-bis(3,4-dicarboxyphenoxy)-diphenyl sulfide dianhydride; 1,3-bis(3,4-dicarboxyphenoxy)benzene dianhydride; 4,4'-bis(3,4-dicarboxyphenoxy)benzophenone dianhydride; 4-(2,3-dicarboxyphenoxy)-4'-(3,4-dicarboxyphenoxy)diphenyl-2,2-propane dianhydride; and mixtures of such dianhydrides.

Organic diamines of the formula (VIII) include, for example, m-phenylenediamine, p-phenylenediamine, 4,4'-diaminodiphenyl propane, 4,4'-diaminodiphenyl methane, benzidine, 4,4'-diaminodiphenyl sulfide, 4,4'-diaminodiphenyl sulfone, 4,4'-diaminodiphenyl ether, 1,5-diaminonaphthalene, 3,3'-dimethylbenzidine, 3,3'-dimethoxybenzidine, 2,4-bis(β-amino-t-butyl) toluene, bis(p-β-amino-t-butylphenyl)ether, bis(p-β-methyl-o-aminophenyl)benzene, 1,3-diamino-4-isopropylbenzene, 1,2-bis(3-aminopropoxy)ethane, m-xylylenediamine, p-xylylenediamine, 2,4-diaminotoluane, 2,6-diaminotoluene, bis(4-aminocyclohexyl)-methane, 3,methylheptamethylenediamine, 4,4-dimethylheptamethylenediamine, 2,11-dodecanediamine, 2,2-dimethylpropylenediamine, octamethylenediamine, 3-methoxyhexamethylenediamine, 2,5-dimethylhexamethylenediamine, 2,5-dimethylheptamethylenediamine, 3-methylheptamethylenediamine, 5-methylnonamethylenediamine, 1,4-cyclohexanediamine, 1,12-octadecanediamine, bis(3-aminopropyl)sulfide, N-methyl-bis(3-aminopropyl)amine, hexamethylenediamine, heptamethylenediamine, nonamethylenediamine, decamethylenediamine, bis(3-aminopropyl) tetramethyldisiloxane, bis(4-aminobutyl)tetramethyldisiloxane, and the like.

In general, the reactions can be advantageously carried out employing well-known solvents, e.g., o-dichlorobenzene, m-cresol/toulene and the like to effect interaction between the bis(ether anhydride) (VII) and the diamines (VIII), at temperatures of from about 100° to about 250°C. Alternatively, the polyetherimides can be prepared by melt polymerization of any of the aforementioned dianhydrides (VII) with any of the aforementioned diamine (VIII) compounds while heating the mixture of the ingredients at elevated temperatures with concurrent intermixing. Generally, melt polymerization temperatures between about 200° to 400°C. and preferably 230° to 300°C can be employed. Any order of addition of chain stoppers ordinarily employed in melt polymerization can be employed.

The conditions of the reaction and the proportions of ingredients can be varied widely depending on the desired molecular weight, intrinsic viscosity, and solvent resistance. In general, equimolar amounts of diamine (VIII) and dianhydride (VII) are employed for high molecular weight polyetherimides. However, in certain instances, a slight molar excess (about 1 to 5 mole percent) of diamine (VIII) can be employed resulting in the production of polyetherimides having terminal amine groups.

Generally, useful polyetherimides have an intrinsic viscosity [η] greater than 0.2 deciliters per gram, preferably 0.35 to 0.60, or 0.7 deciliters per gram measured in m-cresol at 25°C.

Included among the many methods of making the polyetherimides are those disclosed in U.S. Patent Nos. 3,847,867; 3,847,869; 3,850,885; 3,852,242; end 3,855,178. These disclosures are incorporated herein in their entirety by reference for the purpose of teaching, by way of illustration, general and specific methods for preparing polyetherimides for use in the blends of this invention.

The silicone-polyetherimide copolymers (B) employed as additives in compositions of the invention are exemplified by resins containing recurring or repeating chain units of the formula (III) given above interrupted by polysiloxane units of the formula:-

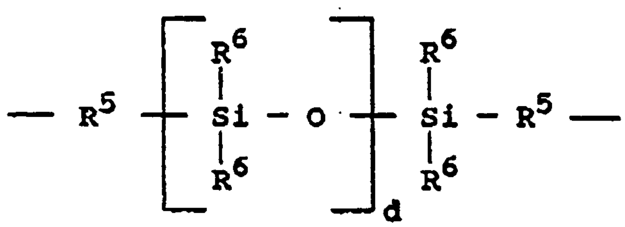

(IX)

wherein each $R^5$ represents a divalent hydrocarbon radical having 1 to 14 carbon atoms; each $R^6$ is independently selected from monovalent hydrocarbon radicals having 1 to 14 carbon atoms; and d is an integer of from 4 to 40.

The silicone-polyetherimide resins described above are generally well-known compounds, which may be prepared by a number of known methods; see for example the procedures described in U.S. Patents 4,690,997 and 4,808,686 incorporated herein by reference thereto. In general, the method of preparation may be by reaction between amino-terminated polydiorganosiloxanes of the formula:-

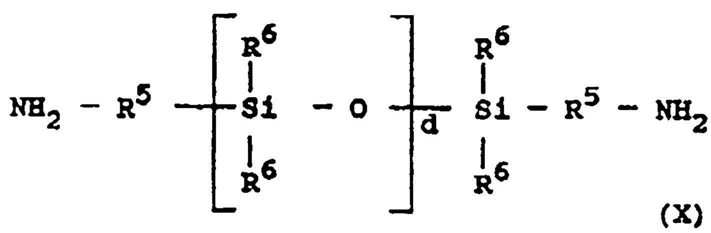

(X)

wherein $R^5$, $R^6$ and d have the meanings previously ascribed to them; and an organic diamine of the formula (VIII) given above; with a substantially equal molar proportion of an aromatic bisanhydride of the formula (VII) given above.

The amine-terminated polydiorganosiloxanes (X) are also well-known compounds which may be prepared by the procedure described in the U.S. Patent 3,185,719 (Prober) which is hereby incorporated herein by reference thereto.

The preferred silicone-polyetherimide resins for use in the present invention contain about 20 to 60 weight percent of siloxane units of the formula (IX) given above.

The compositions of the invention may be modified by the addition of other additives conventionally used in the art of plastics compounding, provided they do not render articles molded from the blend non-ductile or susceptible to stress cracking. Such additives can include fillers (such as clay or talc), supplementary delustrants, reinforcing agent (such as glass fibers), impact modifiers, antistats, plasticizers, flow promoters and other processing aids, stabilizers, colorants, mold release agents, ultraviolet screening agents, drip inhibitors such as polytetrafluoroethylene (PTFE), supplementary or synergistic flame retardants, and the like.

Additional embodiments of the invention include thermoplastic molding compositions containing minor proportions (less than 50 percent by weight) of polycarbonate homopolymers.

Polycarbonate homopolymer resins and their method of preparation by interfacial polymerization are well known; see for example the details provided in the U.S. Patents 3,028,365; 3,334,154; 3,275,601; 3,915,926; 3,030,331; 3,169,121: 3,027,814; and 4,188,314, all of which are incorporated herein by reference thereto. In general, the method is as described above for preparing polyester-carbonates, but in the absence of an ester precursor.

Also included within the blends of the present invention is the presence as an additive, of minor proportions of high molecular weight thermoplastic randomly branched polycarbonates and polyester-carbonates. These randomly branched polymers are prepared by co-reacting a polyfunctional organic compound with the aforedescribed dihydric phenols, carbonate and/or ester precursors. The polyfunctional organic compounds useful in making the branched polycarbonates are set forth in U.S. Pat. Nos. 3,635,895 and 4,001,184 which are incorporated herein by reference. These polyfunctional compounds are generally aromatic and contain at least three functional groups which are carboxyl, carboxylic anhydrides, phenols, haloformyls or mixtures thereof. Some nonlimiting examples of these polyfunctional aromatic compounds include 1,1,1-tri(4-hydroxyphenyl) ethane, 1,3,5-tryhydroxybenzene, trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid,benzophenonetetracarboxylic dianhydride, and the like. The preferred polyfunctional aromatic compounds are 1,1,1-tri(4-hydroxyphenyl) ethane, trimellitic, anhydride or trimellitic acid or their haloformyl derivatives. Also included herein are blends of a linear polycarbonate and a branched polycarbonate.

The production of the compositions of the invention is done by any of the blending operations known for the blending of thermoplastics, for example blending in a kneeling machine such as a Banbury mixer or an extruder. The sequence of addition is not critical but all components should be thoroughly blended together. Blending can be done continuously or batchwise. Melt blending can also be employed.

The invention will be better understood with reference to the following preparations and examples, which are presented for purposes of illustration rather than for limitation, and which set forth the best mode contemplated for carrying out the invention.

The term "iso/tere" is used herein to mean the ratio by weight of isophthalic moieties of the formula (IV) to terephthalic moieties of formula (V) given above.

Where reported, the following test procedures were followed:

Heat Distortion Temperature Under Load (DTUL)

Determined according to ASTM D-648.

Notched Izod (NI)

Determined according to ASTM D-256.

Intrinsic Viscosity (I.V.)

The intrinsic viscosity was measured at a temperature of 25°C in methylene chloride and is reported in deciliters/gram (dl/g).

Stress Cracking

The molded parts were tested for stress crack resistance in the following manner:

Procedure (a) Molded parts were allowed to stand at room temperature for 22 days and then inspected for edge cracking.

Procedure (b) Temperature cycling - the part is heated in an oven at 140° C. for two hours and then cooled to a temperature of 30°C. and held at that temperature for two hours. This cycle of heating and cooling is carried out four times. The parts were visually examined for stress cracks along the surface after each cycle and after equilibration at room temperature for at least 18 hours.

ESTER CONTENT OF POLYESTER-CARBONATE

Weight percent ester content is calculated in the following manner wherein the dihydric phenol reactant is bisphenol A.

$$\text{Wt. \% ester} = \frac{\text{(mole \% ester) (358)}}{\text{(mole \% ester) (358) + (mole \% carbonate) (254)}} \text{x100}$$

$$\text{Mole \% ester} = \frac{\text{moles of aromatic diacid}}{\text{moles of dihydric phenol}} \text{ x 100}$$

358 = molecular weight of the unit

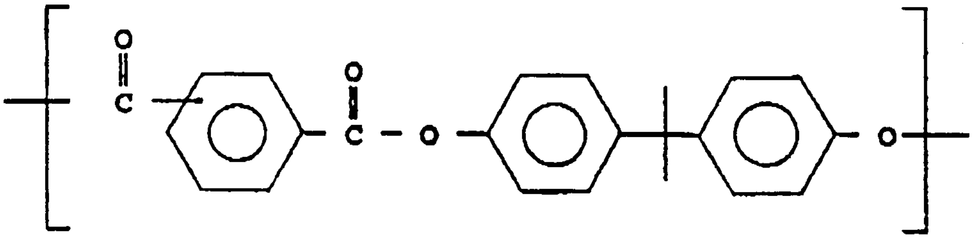

and 254 = molecular weight of the unit

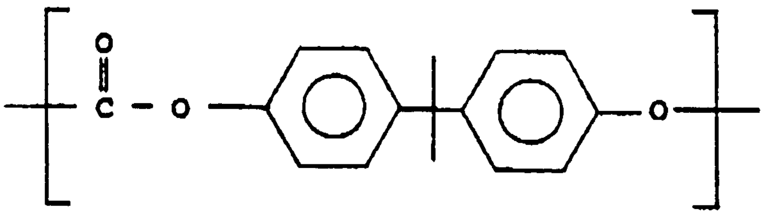

All parts are by weight unless otherwise stated.

Preparation 1

This preparation is of an aromatic polyester-carbonate resin, following the teachings of U.S. Patent 4,430,484 (Example 1).

To a 38 liter reactor vessel there are added 8 liters of methylene chloride, 6 liters of water, 1,906 grams (8.36 moles) of bisphenol A, 20 milliliters of triethylamine, 4 grams of sodium gluconate, and 65 grams of p-tertiary butylphenol molecular weight regulator. At a pH of between about 9-10.5, 1,089.6 grams (5.37 moles) of a mixture of 50% by weight of isophthaloyl dichloride and 50% by weight of terephthaloyl dichloride in 2 liters of methylene chloride are added over a 10 minute interval while controlling the pH at about 9-10.5 with 35% aqueous caustic. After the addition of the diacid chloride mixture, phosgene is added at a rate of 36 grams per minute for 12 minutes while controlling the pH at about 10-11 with 35% aqueous caustic. The polymer mixture is diluted with 5 liters of methylene chloride and the brine phase is separated by centrifuge. The resulting polymer phase is washed with aqueous acid and water and is then recovered by high pressure steam precipitation to yield a white powder having an Intrinsic Viscosity of 0.5 dl/g in methylene chloride at 25°C. To this resin powder is added a minor amount (about 0.1 parts by weight per hundred parts by weight of resin) of a stabilizer mixture containing a phosphite color stabilizer and an epoxy stabilizer. This resin product is then fed to an extruder operating at a temperature of about 316°C. to extrude the resin into strands and the extruded strands are chopped into pellets. The pellets are then injection molded at about 340°C. into test samples measuring 6.35 cm X 1.27 cm X 0.317 cm..

Preparations 2-5

The general procedure of Preparation 1, supra., is repeated a plurality of times, except that the proportions of isophthaloyl and terephthaloyl dichlorides as used therein were modified. The proportions used are set forth in the Tables, below.

Examples 1-6

In a series of runs, each of the polyester-carbonate resins prepared according to Preparations 1-5, supra. were blended with 0.1 percent by weight of the blend of an antioxidant (Irgafos® 168: Ciba-Geigy Corp.), 2.0 percent by weight of titanium dioxide, 21.5 percent by weight of a polyetherimide (Ultem® 1000 grade of polyetherimide, General Electric Co., Pittsfield, MA.) and 2.4 percent by weight of a siloxane-polyetherimide copolymer prepared by the polymerization

of 1 equivalent of 2,2-bis[4-(3,4-dicarboxyphenoxy)phenyl]propane dianhydride with 0.65 equivalents of metaphenylenediamine and 0.35 equivalents of bis-gamma-aminopropyl polydimethyl siloxane, a polymer of the formula IX) given, above wherein d is an average of 10; Siltem®, General Electric Co., Pittsfield, MA., U.S.A. The blend was then fed to an extruder at a temperature of about 340°C. to extrude the blend into strands. The strands were chopped into pellets and injection molded into test samples measuring 6.39 cm x 1.27 cm x 0.317 cm. The samples were tested for physical properties. The composition of each blend and the stress crack test results are set forth in the Table I, below. The ductility

test results are set forth in the Table II, below.

TABLE I

| Xample | PPC Composition | | | Edge Cracks | |
|---|---|---|---|---|---|
| | Wt. % Ester | Iso/Tere | IV | Standing at RT (a.) | Thermal cycling (b.) |
| 1 | 40 | 50/50 | 0.56 | None | |
| 2 | 80 | 50/50 | 0.561 | None | |
| 3 | 80 | 50/50 | 0.618 | None | |
| 4 | 44 | 0/100 | 0.649 | None | |
| 5 | 43 | 0/100 | | None | None |
| 6 | 48 | 0/100 | | None | None |

TABLE II

| | Notched Izod | | HDT(°C) at 18.6 Kg/cm |
|---|---|---|---|
| | $Kg/cm^2$ | mode of failure | |
| 1 | 0.71 | ductile | |
| 2 | 0.30 | | |
| 3 | 0.41 | | |
| 4 | 0.09 | ductile | |
| 5 | 0.78 | ductile | 160 |
| 6 | 0.71 | ductile | 162 |

Examples 7-10

Repeating the general procedure of Examples 1-6, supra., but replacing the polyester-carbonates as used therein with polymers of different ester content and some partially with a proportion of polycarbonate (a polycarbonate homopolymer, the phosgenation product of bisphenol-A; Lexan® 105; General Electric Co., Mount Vernon, Indiana) the following test results were obtained (Table III).

Table III

| Blend Composition (parts by weight) | 7 | 8 | 9 | 10 |
|---|---|---|---|---|
| PPC 1 (a.) | 74.92 | | 58.06 | |
| PPC 2 (a.) | | 74.92 | | |
| Lexan® 105, supra | 25 | 25 | 19.36 | 19.36 |
| ULTEM® 1000, supra | | | 22.5 | 22.5 |
| Irgafos® 168, supra | 0.08 | 0.08 | 0.08 | 0.08 |
| Notched Izod | | | | |
| 125 mil ($Kg/cm^2$) | 0.70 | 0.56 | 0.21 | 0.56 |
| After thermal cyc. (b.) | 0.14 | 0.49 | 0.14 | 0.28 |
| Cracking After Thermal Cycle (c.) | | | | |
| Cycle 1 | 0 | 0 | 0 | 0 |
| Cycle 2 | 0 | 2 | 0 | 0 |
| Cycle 3 | 0 | 2 | 0 | 0 |
| Cycle 4 | 0 | 3 | 0 | 0 |

a. PPC 1 = 93/7 Iso/Tere at 80 % Wgt. Ester. PPC 2=50/50 Iso/Tere at 80 % Wgt. Ester.
b. Bars were cycled for four cycles. For each cycle the bars were placed in a freezer at - 40 for 2 hrs. and then in an oven at +140 C for 2 hrs.
c. Number of bars out of the four that exhibited cracking after the cycle.

**Claims**

1. A method of improving stress crack resistance of articles molded from polyester-carbonate resins, which comprises;
   blending with the polyester-carbonate

(A) from about 5 to 30 parts by weight of a polyetherimide resin having repeating chain units of the formula:-

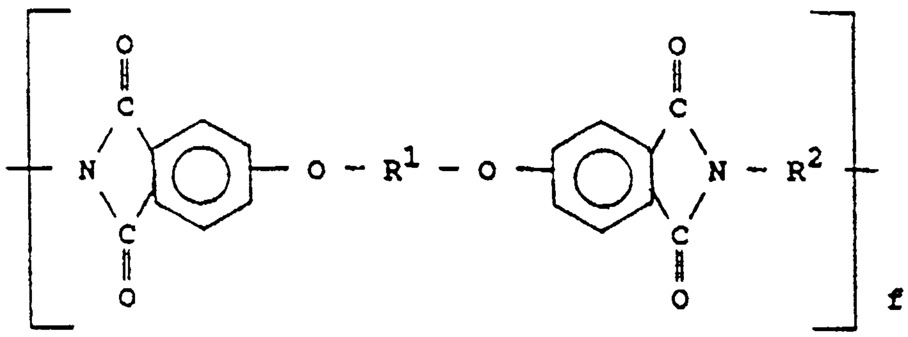

(I)

wherein f is an integer of from about 10 to shout 500; $R^2$ represents a divalent aliphatic hydrocarbon radical containing from 2 to about 12 carbon atoms, a divalent aromatic hydrocarbon of 6 to 30 carbon atoms, a halogenated hydrocarbon radical containing from 6 to 18 carbon atoms, or a divalent cycloaliphatic hydrocarbon radical containing from 3 to about 10 carbon atoms; and $R^1$ is a divalent aromatic organic radical having from 6 to 30 carbon atoms inclusive; and

(B) from about O to 5 parts by weight of a thermoplastic siloxane-polyetherimide copolymer.

**2.** The method of claim 1 wherein the polyester-carbonate contains recurring polycarbonate chain units of the formula:-

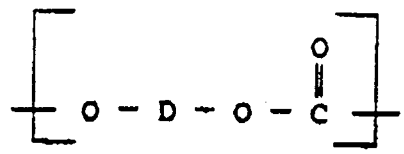

wherein D is a divalent aromatic radical of the dihydric phenol employed in the resin preparation; and repeating or recurring carboxylic chain units of the formula:-

-R-O-D-O-

wherein D has the meaning previously ascribed to it and R is a divalent moiety selected from those of the formulae:-

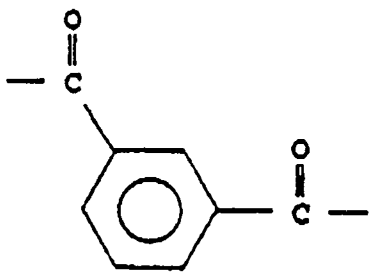

or

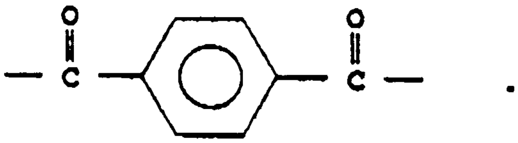

3. The method of claim 1 wherein the polyetherimide resin has repeating chain units of the formula:-

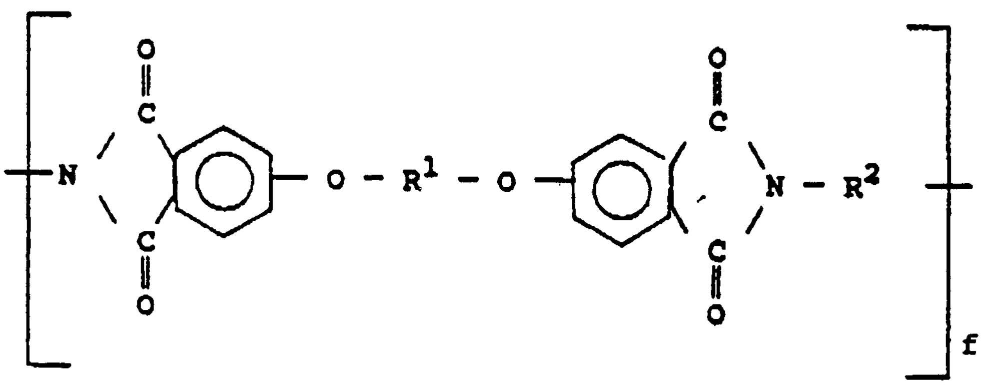

wherein f is an integer of from about 10 to about 500; $R^2$ represents a divalent aliphatic hydrocarbon radical containing from 2 to about 12 carbon atoms, a divalent aromatic hydrocarbon of 6 to 30 carbon atoms, a halogenated hydrocarbon radical containing from 6 to 18 carbon atoms, or a divalent cycloaliphatic hydrocarbon radical containing from 3 to about 10 carbon atoms; and $R^1$ is a divalent aromatic organic radical having from 6 to 30 carbon atoms, inclusive.

4. The method of claim 3 wherein $R^1$ is selected from the group consisting of aromatic hydrocarbon radicals; halogenated aromatic hydrocarbon radicals; and radicals of the formula:-

$$-R^3-(G)_g-R^3-$$

wherein $R^3$ is a divalent radical having from 6-13 carbon atoms, inclusive, selected from hydrocarbon radicals and halogenated hydrocarbon radicals; g is 0 or 1 and G is a divalent radical selected from those of the formula:-

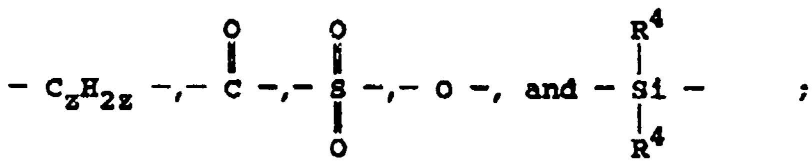

wherein z is an integer of from 1-5, and $R^4$ is a monovalent alkyl, aryl, alkaryl or aralkyl radical.

**5.** The method of claim 4 wherein $R^1$ is the divalent moiety of the formula:-

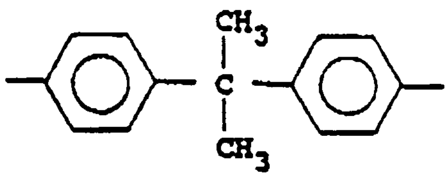

**6.** The method of claim 5 wherein the aromatic polyester-carbonate is a copolymer resulting from the condensation of bisphenol A with terephthaloyl dichloride and phosgene.

**7.** The method of claim 1 wherein the siloxane-polyetherimide copolymer contains recurring or repeating chain units of the formula:-

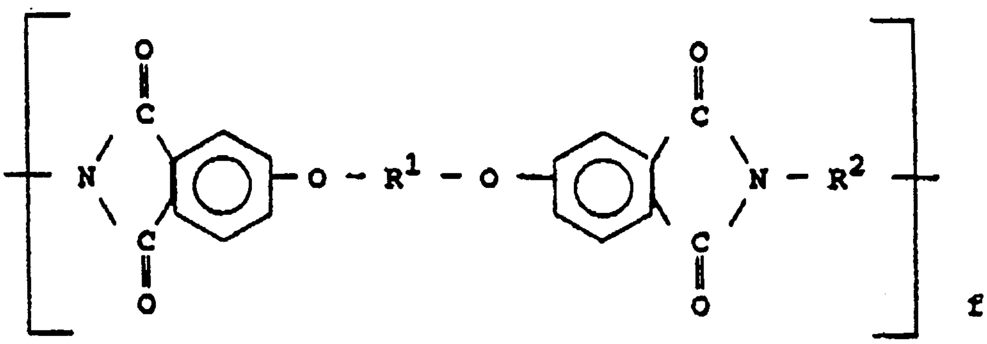

wherein f is an integer of from about 10 to about 500; $R^2$ represents a divalent aliphatic hydrocarbon radical containing from 2 to about 12 carbon atoms, inclusive, a divalent aromatic hydrocarbon of 6 to 30 carbon atoms, a halogenated hydrocarbon radical containing from 6 to 18 carbon atoms, or a divalent cycloaliphatic hydrocarbon radical containing from 3 to about 10 carbon atoms; end $R^1$ is a divalent aromatic radical having from 6 to 30 carbon atoms; interrupted by polysiloxane units of the formula:-

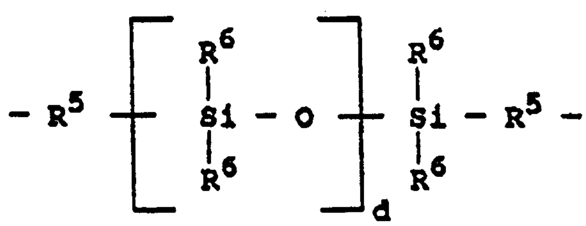

wherein each $R^5$ represents a divalent hydrocarbon radical having 1 to 14 carbon atoms; each $R^6$ is independently selected from monovalent hydrocarbon radicals having 1 to 14 carbon atoms; and d is an integer of from 4 to 40.

**8.** A thermoplastic molding composition for molding crack-resistant articles, which comprises; a blend of

(a) from about 70 to 95 parts by weight of a polyester-carbonate resin containing recurring polycarbonate chain units of the formula:-

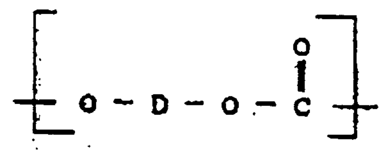

wherein D is a divalent aromatic radical of the dihydric phenol employed in the resin preparation; and repeating or recurring carboxylic chain units of the formula:-

-R-O-D-O-

wherein D has the meaning previously ascribed to it and R is a divalent moiety selected from those of the formulae:-

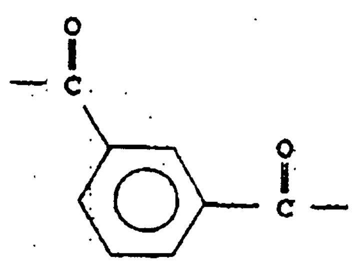

or

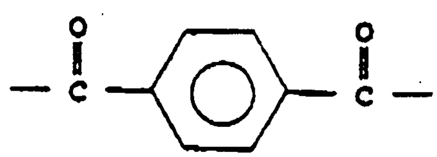

(b) from about 5 to 29 parts by weight of a polyetherimide resin having repeating chain units of the formula:-

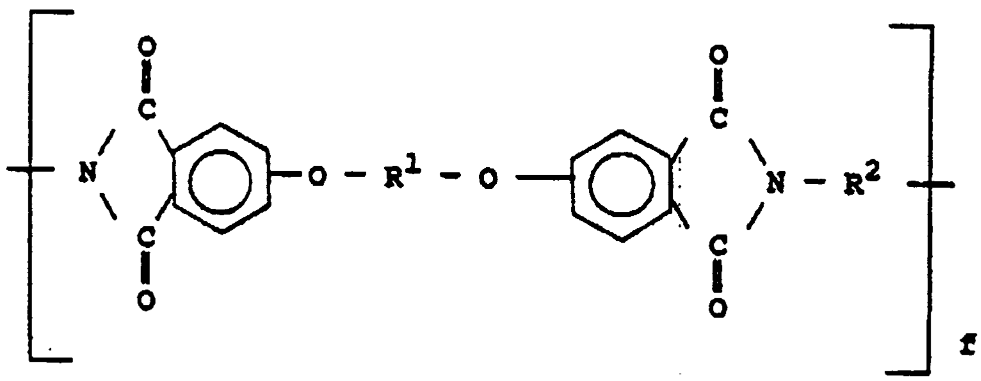

wherein f is an integer of from about 10 to about 500; $R^2$ represents a divalent aliphatic hydrocarbon radical containing from 2 to about 12 carbon atoms, a divalent aromatic hydrocarbon of 6 to 30 carbon atoms, a halogenated hydrocarbon radical containing from 6 to 18 carbon atoms, or a divalent cycloaliphatic hydrocarbon radical containing from 3 to about 10 carbon atoms; and $R^1$ is a divalent aromatic organic radical having from 6 to 30 carbon atoms, inclusive; and

(c) from about O to 5 parts by weight of a silicone-polyetherimide copolymer containing recurring or repeating chain units of the formula:-

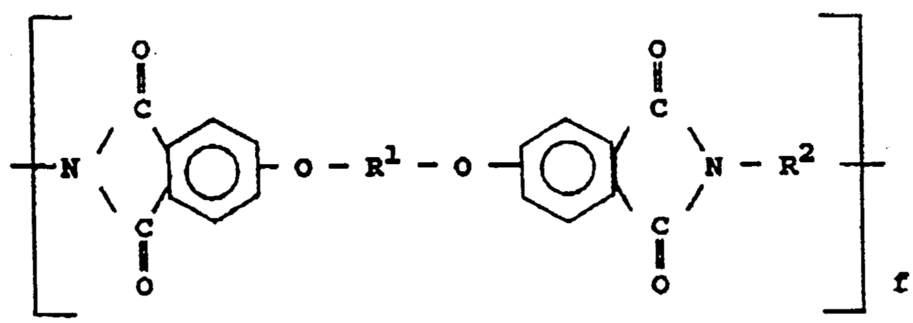

wherein f is an integer of from about 10 to about 500; $R^2$ represents a divalent aliphatic hydrocarbon radical containing from 2 to about 12 carbon atoms, inclusive, a divalent aromatic hydrocarbon of 6 to 10 carbon atoms, a halogenated hydrocarbon radical containing from 6 to 18 carbon atoms, or a divalent cycloaliphatic hydrocarbon radical containing from 3 to about 10 carbon atoms; and $R^1$ is a divalent aromatic radical having from 6 to 30 carbon atoms; interrupted by polysiloxane units of the formula:-

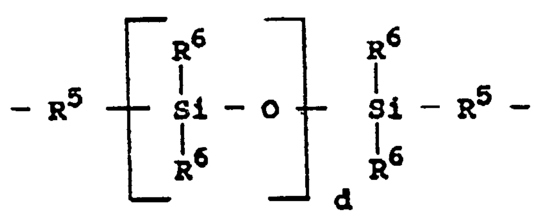

wherein each $R^5$ represents a divalent hydrocarbon radical having 1 to 14 carbon atoms; each $R^6$ is independently selected from monovalent hydrocarbon radicals having 1 to 14 carbon atoms; and d is an integer of from 4 to 40.

9. The composition of claim 8 wherein $R^1$ is selected from the group consisting of aromatic hydrocarbon radicals; halogenated aromatic hydrocarbon radicals; and radicals of the formula:-

$$-R^3-(G)_g-R^3-$$

wherein $R^3$ is a divalent radical having from 6-13 carbon atoms, inclusive, selected from hydrocarbon radicals and halogenated hydrocarbon radicals; g is 0 or 1 and G is a divalent radical selected from those of the formula:-

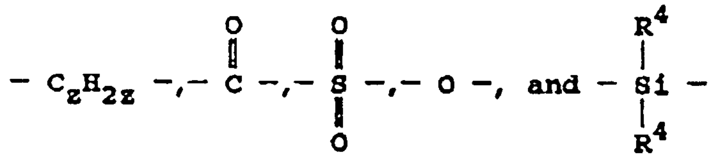 ;

wherein z is an integer of from 1-5, and $R^4$ is a monovalent alkyl, aryl, alkaryl or aralkyl radical.

**10.** The composition of claim 8 wherein $R^1$ is the divalent moiety of the formula:-

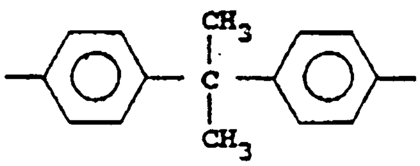 .

European Patent Office

# EUROPEAN SEARCH REPORT

Application Number
EP 94 30 7176

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-94 10245 (GENERAL ELECTRIC COMP.)<br>* claims 1-4,14-16 *<br>* page 10, paragraph 2 - page 13, paragraph 3 *<br>* page 19, paragraph 3 - page 20, paragraph 2 *<br>* examples 2-22,38 * | 1-10 | C08L69/00<br>//(C08L69/00, 79:08,83:10) |
| A | US-A-5 051 483 (J.A. ROCK ET AL.)<br>* claims 1-4,12-14,17-19 *<br>* column 8, line 61 - column 9, line 7 *<br>* column 9, line 62 - column 10, line 39 * | 1-10 | |
| A | EP-A-0 256 761 (AMOCO CORP.)<br>* claims 1-4,6 *<br>* page 5, line 50 - line 57 *<br>* page 9, line 25 - line 27 * | 1-6,8-10 | |
| A | WO-A-84 04752 (GENERAL ELECTRIC COMP.)<br>* claims 1-6,11; example 9 *<br>* page 19, line 7 - line 21 * | 1-6,8-10 | **TECHNICAL FIELDS SEARCHED (Int.Cl.6)** |
| A | EP-A-0 303 843 (GENERAL ELECTRIC COMP.)<br>* abstract; claims 1-8 *<br>* page 3, line 14 - page 4, line 2 *<br>* page 9, line 15 - line 33; example 8 * | 1,2,6-8 | C08L |

The present search report has been drawn up for all claims

| Place of search | Date of completion of the search | Examiner |
|---|---|---|
| BERLIN | 15 March 1995 | Krische, D |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)